(19) Europäisches Patentamt / European Patent Office / Office européen des brevets

(11) **EP 4 488 634 A2**

(12) **EUROPEAN PATENT APPLICATION**

(43) Date of publication:
**08.01.2025   Bulletin 2025/02**

(51) International Patent Classification (IPC):
***G01F 15/00*** *(2006.01)*

(21) Application number: **24214311.3**

(52) Cooperative Patent Classification (CPC):
**G01F 1/8436; G01F 15/007**

(22) Date of filing: **12.11.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(62) Document number(s) of the earlier application(s) in accordance with Art. 76 EPC:
**21824144.6 / 4 430 366**

(71) Applicant: **Micro Motion, Inc.**
**Boulder, CO 80301 (US)**

(72) Inventors:
• **SCHMIDT, Marcus J.**
**Centennial, CO 80015 (US)**

• **MCANALLY, Craig B.**
**Thornton, 80241 (US)**

(74) Representative: **Ellis, Christopher Paul**
**Ollila Law Limited**
**Unit 7 The Courtyard**
**Timothys Bridge Road**
**Stratford upon Avon CV37 9NP (GB)**

Remarks:
This application was filed on 20.11.2024 as a divisional application to the application mentioned under INID code 62.

(54) **CORIOLIS FLOWMETER EXTERNAL MAGNETIC FIELD QUANTIFICATION APPARATUS AND METHOD**

(57)     A Coriolis flowmeter (5) is provided, the Coriolis flowmeter (5) comprising flow conduits (103A, 103B), having a driver (104), and pick-off sensors (105, 105') connected thereto. A meter electronics (20) is configured to drive the driver (104) to oscillate the flow conduits (103A, 103B) in a first bending mode, and to receive signals from the pick-off sensors (105, 105'). The meter electronics (20) is configured to indicate a presence of an external magnetic field.

FIG.9

EP 4 488 634 A2

**Description**

TECHNICAL FIELD

The embodiments described below relate to vibratory sensors and, more particularly, to a flowmeter that can detect external magnetic fields and related methods.

BACKGROUND

Vibrating sensors, such as for example, vibrating densitometers and Coriolis flowmeters are generally known, and are used to measure mass flow and other information related to materials flowing through a conduit in the flowmeter. Exemplary Coriolis flowmeters are disclosed in U.S. Patent 4,109,524, U.S. Patent 4,491,025, and Re. 31,450. These flowmeters have meter assemblies with one or more conduits of a straight or curved configuration. Each conduit configuration in a Coriolis mass flowmeter, for example, has a set of natural vibration modes, which may be of simple bending, torsional, or coupled type. Each conduit can be driven to oscillate at a preferred mode. When there is no flow through the flowmeter, a driving force applied to the conduit(s) causes all points along the conduit(s) to oscillate with identical phase or with a small "zero offset", which is a time delay measured at zero flow.

As material begins to flow through the conduit(s), Coriolis forces cause each point along the conduit(s) to have a different phase. For example, the phase at the inlet end of the flowmeter lags the phase at the centralized driver position, while the phase at the outlet leads the phase at the centralized driver position. Pickoffs on the conduit(s) produce sinusoidal signals representative of the motion of the conduit(s). Signals output from the pickoffs are processed to determine the time delay between the pickoffs, which is known as the $\Delta T$. The time delay between the two or more pickoffs is proportional to the mass flow rate of material flowing through the conduit(s).

A meter electronics connected to the driver generates a drive signal to operate the driver and also to determine a mass flow rate and/or other properties of a process material from signals received from the pickoffs. The driver may comprise one of many well-known arrangements; however, a magnet and an opposing drive coil have received great success in the flowmeter industry. An alternating current is passed to the drive coil for vibrating the conduit(s) at a desired conduit amplitude and frequency. It is also known in the art to provide the pickoffs as a magnet and coil arrangement very similar to the driver arrangement.

When a strong external magnet is placed proximate a pickoff, a few effects are observable. First, the pickoff voltage will either rapidly drop or increase. Second, the phase shift between pickoffs will either rapidly drop or increase. Once the magnet is removed, the sensor voltages and phase shift return to normal. What is needed is a device and method to detect external magnetic fields and predict their effects on a flowmeter's reading.

SUMMARY

A Coriolis flowmeter is provided. In an embodiment, the Coriolis flowmeter comprises flow conduits, as well as a driver and pick-off sensors connected to the flow conduits. Meter electronics is configured to drive the driver to oscillate the flow conduits in a first bending mode, and to receive signals from the pick-off sensors. The meter electronics is configured to indicate a presence of an external magnetic field if a magnetic field is detected.

A method for operating a Coriolis flowmeter is provided. According to an embodiment, the method comprises flowing a flow material through flow conduits of the flowmeter and driving a driver connected to the flow conduits to oscillate the flow conduits in a first bending mode. Signals are received from pick-off sensors connected to the flow conduits. A presence of an external magnetic field is indicated if a magnetic field is detected.

ASPECTS

According to an aspect a Coriolis flowmeter is provided comprising flow conduits, as well as a driver and pick-off sensors connected to the flow conduits. Meter electronics is configured to drive the driver to oscillate the flow conduits in a first bending mode, and to receive signals from the pick-off sensors. The meter electronics is configured to indicate a presence of an external magnetic field if a magnetic field is detected.

Preferably, the presence of an external magnetic field is indicated when a step change in voltage is detected in the signal provided by at least one of the pick-off sensors.

Preferably, the presence of an external magnetic field is indicated when a spike in voltage is detected in the signal provided by at least one of the pick-off sensors.

Preferably, the presence of an external magnetic field is indicated when a spike in voltage is detected in the signal provided by the driver.

Preferably, the presence of an external magnetic field is indicated when a step change in $\Delta T$ is detected.

Preferably, a phase of each pick-off sensor is measured relative to a third independent signal.

Preferably, the third independent signal comprises a drive signal representing a drive mode other than the first bending mode.

Preferably, the presence of an external magnetic field is indicated when a zero-flow rate is compared to a measured asymmetry between an open loop driver signal $i_{drive2}$, and pickoff voltages $V_{LPO2}$, and $V_{RPO2}$, wherein $V_{LPO2}$, and $V_{RPO2}$ are pickoff voltages at a second bend mode frequency.

Preferably, a tamper correction factor is calculated and applied to the measured flowrate to offset the effect of an external magnetic field when the presence of an external magnetic field is detected.

Preferably, an alarm is triggered when the presence of an external magnetic field is detected.

According to an aspect, a method for operating a Coriolis flowmeter comprises flowing a flow material through flow conduits of the flowmeter and driving a driver connected to the flow conduits to oscillate the flow conduits in a first bending mode. Signals are received from pick-off sensors connected to the flow conduits. A presence of an external magnetic field is indicated if a magnetic field is detected.

Preferably, the presence of an external magnetic field is indicated when at least one of a spike and step change in voltage is detected in the signal provided by at least one of the pick-off sensors.

Preferably, the presence of an external magnetic field is indicated when a step change in $\Delta T$ is detected.

Preferably, a phase of each pick-off sensor is measured relative to a third independent signal comprising a drive signal representing a drive mode other than the first bending mode.

Preferably, the presence of an external magnetic field is indicated when a zero-flow rate is compared to a measured asymmetry between an open loop driver signal $i_{drive2}$, and pickoff voltages $V_{LPO2}$, and $V_{RPO2}$, wherein $V_{LPO2}$, and $V_{RPO2}$ are pickoff voltages at a second bend mode frequency.

Preferably, a tamper correction factor is calculated and applied to the measured flowrate to offset the effect of an external magnetic field when the presence of an external magnetic field is detected.

Preferably, an alarm is triggered when the presence of an external magnetic field is detected.

BRIEF DESCRIPTION OF THE DRAWINGS

The same reference number represents the same element on all drawings. It should be understood that the drawings are not necessarily to scale.

FIG. 1 shows a vibratory meter according to an embodiment;
FIG. 2 shows a meter electronics according to an embodiment;
FIG. 3 shows the effect of magnetic fields on a flowmeter sensor pickoff voltage according to an embodiment;
FIG. 4 shows the effect of magnetic fields on flow rate measurement according to an embodiment;
FIG. 5 illustrates a relationship between drive current and pickoff sensor voltages;
FIG. 6 illustrates the first bending mode of a dual-U-tube Coriolis sensor;
FIG. 7 illustrates the twist mode of a dual-U-tube Coriolis sensor as a result of fluid flow;
FIG. 8 illustrates the second bend mode of a dual-U-tube Coriolis sensor; and
FIG. 9 illustrates a phasor diagram for the second bend mode of the flowmeter, particularly illustrating the symmetric shift of $V_{LPO2}$ and $V_{RPO2}$ with flow.

DETAILED DESCRIPTION

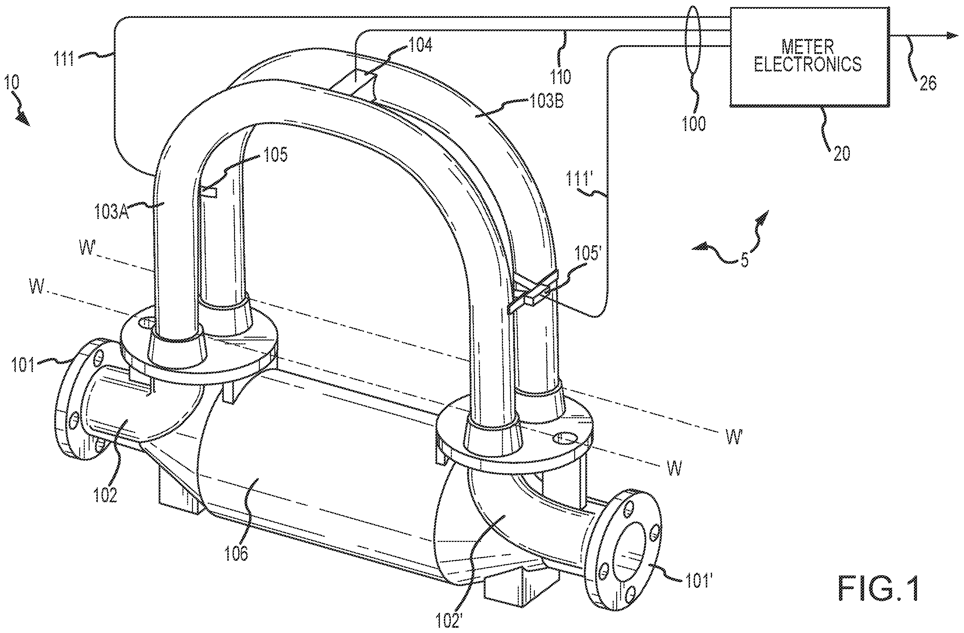

**FIGS. 1 - 9** and the following description depict specific examples to teach those skilled in the art how to make and use the best mode of embodiments of a sensor assembly, brace bars, drivers, and pickoff sensors. For the purpose of teaching inventive principles, some conventional aspects have been simplified or omitted. Those skilled in the art will appreciate variations from these examples that fall within the scope of the present description. Those skilled in the art will appreciate that the features described below can be combined in various ways to form multiple variations of embodiments. As a result, the embodiments described below are not limited to the specific examples described below, but only by the claims and their equivalents.

**FIG. 1** shows a flowmeter 5 according to an embodiment. The flowmeter 5 comprises a sensor assembly 10 and meter electronics 20. The meter electronics 20 is connected to the sensor assembly 10 via leads 100 and is configured to provide measurements of one or more of a density, mass flow rate, volume flow rate, totalized mass flow, temperature, or other measurements or information over a communication path 26. The flowmeter 5 can comprise a Coriolis mass flowmeter or other vibratory flowmeter. It should be apparent to those skilled in the art that the flowmeter 5 can comprise any manner of flowmeter 5, regardless of the number of drivers, pick-off sensors, flow conduits, or the operating mode of vibration.

The sensor assembly 10 includes a pair of flanges 101 and 101', manifolds 102 and 102', a driver 104, pick-off sensors 105 and 105', and flow conduits 103A and 103B. The driver 104 and the pick-off sensors 105 and 105' are connected to the flow conduits 103A and 103B.

The flanges 101 and 101' are affixed to the manifolds 102 and 102'. The manifolds 102 and 102' can be affixed to opposite ends of a spacer 106 in some embodiments. The spacer 106 maintains the spacing between the manifolds 102 and 102'. When the sensor assembly 10 is inserted into a pipeline (not shown) which carries the process fluid being measured, the process fluid enters the sensor assembly 10 through the flange 101, passes through the inlet manifold 102 where the total amount of process fluid is directed to enter the flow conduits 103A and 103B, flows through the flow conduits 103A and 103B and back into the outlet manifold 102', where it exits the sensor assembly 10 through the flange 101'.

The process fluid can comprise a liquid. The process fluid can comprise a gas. The process fluid can comprise a multi-phase fluid, such as a liquid including entrained gases and/or entrained solids, for example without limitation. The flow conduits 103A and 103B are selected and appropriately mounted to the inlet manifold 102 and to the outlet manifold 102' so as to have substantially the same mass distribution, moments of inertia, and elastic moduli about the bending axes W-W and W'-W', respectively. The flow conduits 103A and 103B extend outwardly from the manifolds 102 and 102' in an essentially parallel fashion.

The flow conduits 103A and 103B are driven by the driver 104 in opposite directions about the respective bending axes W and W' and at what is termed the first out of phase bending mode of the flowmeter 5. The driver 104 may comprise one of many well-known arrangements, such as a magnet mounted to the flow conduit 103A and an opposing coil mounted to the flow conduit 103B. An alternating current is passed through the opposing coil to cause both conduits to oscillate. A suitable drive signal is applied by the meter electronics 20 to the driver 104 via lead 110. Other driver devices are contemplated and are within the scope of the description and claims.

The meter electronics 20 receives sensor signals on leads 111 and 111', respectively. The meter electronics 20 produces a drive signal on lead 110 which causes the driver 104 to oscillate the flow conduits 103A and 103B. Other sensor devices are contemplated and are within the scope of the description and claims.

The meter electronics 20 processes the left and right velocity signals from the pick-off sensors 105 and 105' in order to compute a flow rate, among other things. The communication path 26 provides an input and an output means that allows the meter electronics 20 to interface with an operator or with other electronic systems. The description of FIG. 1 is provided merely as an example of the operation of a flowmeter and is not intended to limit the teaching of the present invention. In embodiments, single tube and multi-tube flowmeters having one or more drivers and pickoffs are contemplated.

The meter electronics 20 in one embodiment is configured to vibrate the flow conduit 103A and 103B. The vibration is performed by the driver 104. The meter electronics 20 further receives resulting vibrational signals from the pickoff sensors 105 and 105'. The vibrational signals comprise a vibrational response of the flow conduits 103A and 103B. The meter electronics 20 processes the vibrational response and determines a response frequency and/or phase difference. The meter electronics 20 processes the vibrational response and determines one or more flow measurements, including a mass flow rate and/or density of the process fluid. Other vibrational response characteristics and/or flow measurements are contemplated and are within the scope of the description and claims.

In one embodiment, the flow conduits 103A and 103B comprise substantially omega-shaped flow conduits, as shown. Alternatively, in other embodiments, the flowmeter can comprise substantially straight flow conduits, U-shaped conduits, delta-shaped conduits, etc. Additional flowmeter shapes and/or configurations can be used and are within the scope of the description and claims.

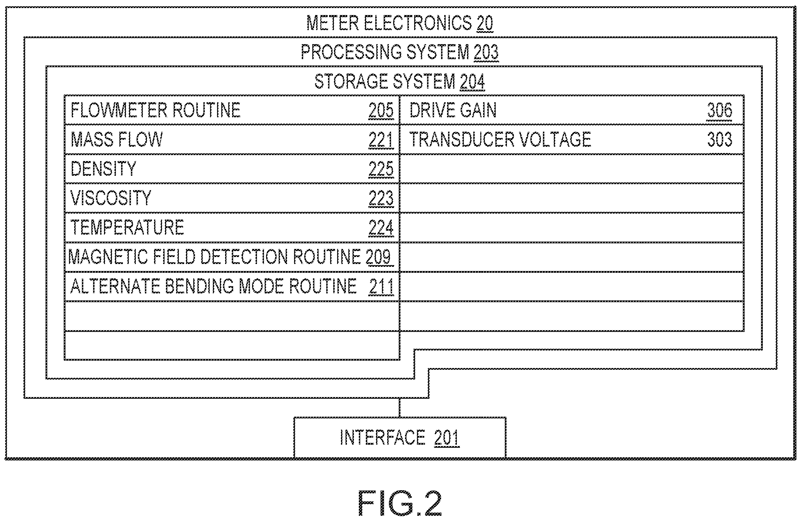

FIG. 2 is a block diagram of the meter electronics 20 of a flowmeter 5 according to an embodiment. In operation, the flowmeter 5 provides various measurement values that may be outputted including one or more of a measured or averaged value of mass flow rate, volume flow rate, individual flow component mass and volume flow rates, and total flow rate, including, for example, both volume and mass flow.

The flowmeter 5 generates a vibrational response. The vibrational response is received and processed by the meter electronics 20 to generate one or more fluid measurement values. The values can be monitored, recorded, saved, totaled, and/or output.

The meter electronics 20 includes an interface 201, a processing system 203 in communication with the interface 201, and a storage system 204 in communication with the processing system 203. Although these components are shown as distinct blocks, it should be understood that the meter electronics 20 can be comprised of various combinations of integrated and/or discrete components.

The interface 201 is configured to communicate with the sensor assembly 10 of the flowmeter 5. The interface 201 may be configured to couple to the leads 100 (see FIG. 1) and exchange signals with the driver 104, pickoff sensors 105 and 105', and temperature sensors (not shown), for example. The interface 201 may be further configured to communicate over the communication path 26, such as to external devices.

The processing system 203 can comprise any manner of processing system. The processing system 203 is configured to retrieve and execute stored routines in order to operate the flowmeter 5. The storage system 204 can store routines including a flowmeter routine 205, a magnetic field detection routine 209, and an alternate bending mode routine 211. Other measurement/processing routines are contemplated and are within the scope of the description and claims. The storage system 204 can store measurements, received values, working values, and other information. In some embodiments, the storage system stores a mass flow (m˙) 221, a density ($\rho$) 225, a viscosity ($\mu$) 223, a temperature (T) 224, a drive gain 306, a transducer voltage 303, and any other variables known in the art.

The flowmeter routine 205 can produce and store fluid quantifications and flow measurements. These values can comprise substantially instantaneous measurement values or can comprise totalized or accumulated values. For example, the flowmeter routine 205 can generate mass flow measurements and store them in the mass flow 221 storage of the storage system 204, for example. The flowmeter routine 205 can generate density 225 measurements and store them in the density 225 storage, for example. The mass flow 221 and density 225 values are determined from the vibrational response, as previously discussed and as known in the art. The mass flow and other measurements can comprise a substantially instantaneous value, can comprise a sample, can comprise an averaged value over a time interval, or can comprise an accumulated value over a time interval. The time interval may be chosen to correspond to a block of time during which certain fluid conditions are detected, for example a liquid-only fluid state, or alternatively, a fluid state including liquids and entrained gas. In addition, other mass flow and related quantifications are contemplated and are within the scope of the description and claims.

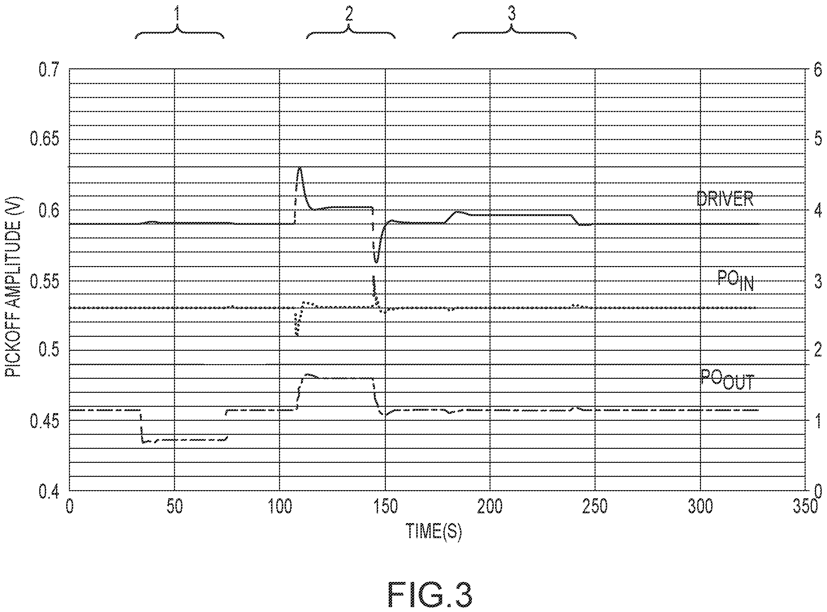

Turning to **FIG. 3,** it is shown that by monitoring meter electronics 20, external magnetic fields, whether from electromagnetic sources or permanent magnets, affect the reading of the sensor assembly 10 when magnets and coils are utilized for the pick-off sensors 105 and 105'. It is evident that relatively sharp and symmetrical step changes are present.

The region noted by Bracket #1 in FIG. 3 represents a magnet being placed proximate the pick-off sensor 105' located closest to the flowmeter's output. When a magnet is placed there, a relatively sharp and symmetrical step change in voltage is detected in the signal provided by the pick-off sensor 105' located closest to the flowmeter's output (labeled $PO_{OUT}$ in FIG. 3).

The region noted by Bracket #2 in FIG. 3 represents a magnet being placed proximate the pick-off sensor 105 located closest to the flowmeter's input. When a magnet is placed there, a relatively sharp and symmetrical step change in voltage is also detected in the signal provided by the pick-off sensor 105' located closest to the flowmeter's output (labeled $PO_{OUT}$ in FIG. 3). Voltage spikes are also detected in the signal provided by the pick-off sensor 105 located closest to the flowmeter's input (labeled $PO_{IN}$ in FIG. 3). Voltage spikes are also detected in the signal provided by the driver 104.

The region noted by Bracket #3 in FIG. 3 represents a magnet being placed proximate the driver 104. A detectable and relatively sharp and symmetrical step change in voltage is detected in the signal provided by the driver 104.

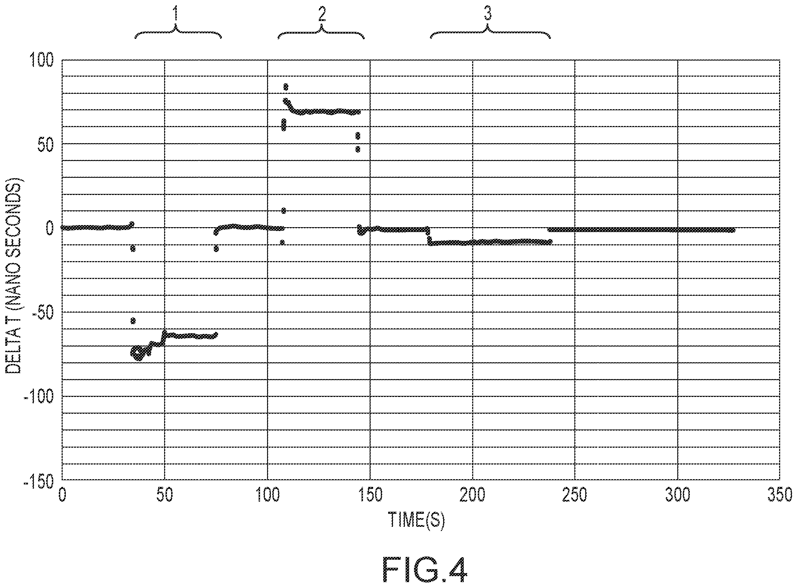

Turning to **FIG. 4,** it is shown that external magnets affect the $\Delta T$ readings of the flowmeter 5. When the driver 104 stimulates the flow conduits 103A,103B to oscillate in opposition at the natural resonant frequency, the flow conduits 103A,103B oscillate, and the voltage generated from each pick-off sensor 105,105' generates a sine wave. This indicates the motion of one conduit relative to the other. The time delay between the two sine waves is referred to as the $\Delta T$, which is directly proportional to the mass flow rate. If the phase of either of the flow conduits 103A,103B is affected, $\Delta T$ changes. Flow should cause a positive change in one pick-off sensor's phase and an equal negative change in the other pick-off sensor's phase.

The region noted by Bracket #1 in FIG. 4 represents a magnet being placed proximate the pick-off sensor 105' located closest to the flowmeter's output. When a magnet is placed there, a relatively sharp and symmetrical stepped decrease in $\Delta T$ is detected.

The region noted by Bracket #2 in FIG. 4 represents a magnet being placed proximate the pick-off sensor 105 located closest to the flowmeter's input. When a magnet is placed there, a relatively sharp and symmetrical stepped increase in $\Delta T$ is detected.

The region noted by Bracket #3 in FIG. 4 represents a magnet being placed proximate the driver 104. When a magnet is placed there, a relatively sharp and symmetrical stepped decrease in $\Delta T$ is detected.

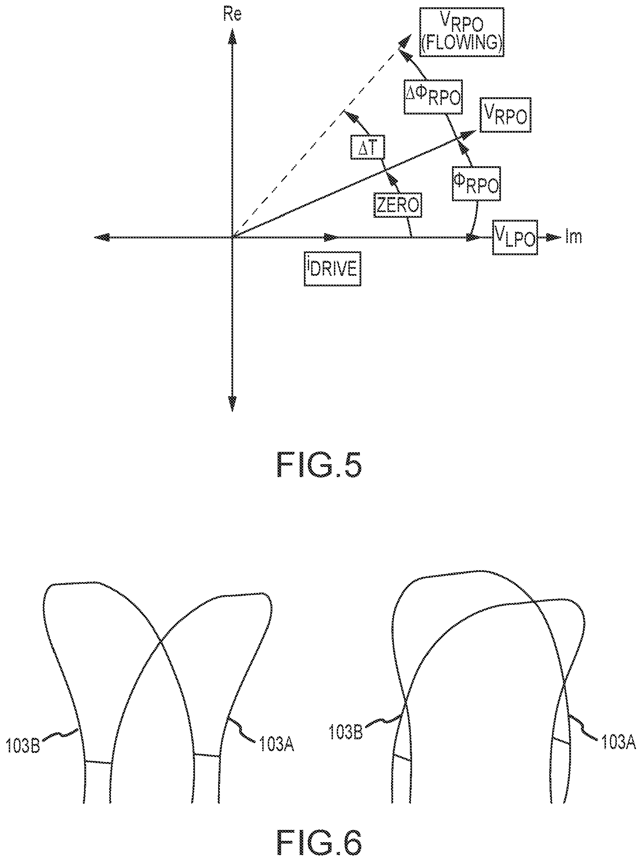

As noted above, if the phase of either of the flow conduits 103A,103B is affected, $\Delta T$ changes, but furthermore, if the phase of each pick-off sensor 105,105' is measured relative to a third independent signal, it may then be determined whether or not $\Delta T$ is derived from mass flow or not. For example, drive current may seem like a good choice for this third signal, but unfortunately, drive current is not independent of the two pick-off sensor voltages, as is illustrated in **FIG. 5.**

FIG. 5 shows an example phasor diagram illustrating the relationship between the drive current, pick-off sensor 105' voltage ($V_{RPO}$), pick-off sensor 105 voltage ($V_{LPO}$), and $\Delta T$ in a typical example flowmeter electronics. In this instance, the drive current is generated from the pick-off sensor 105 voltage. The dashed line represents fluid flow and the resulting voltage ($V_{RPO}$ Flowing). It will be evident that meter electronics 20 cannot differentiate between a scaled phase change $\Delta\Phi_{RPO}$ and the $\Delta T$. When fluid flows through the tubes, the drive current ($i_{drive}$) remains 0° phase shifted from the pick-off sensor 105 voltage ($V_{LPO}$), and the measured $\Delta T$ comes entirely from the pick-off sensor 105' phase ($\Phi_{RPO}$).

Since the drive current cannot be used as an independent signal, in an embodiment a third signal is added into the drive current. In an embodiment, the flow conduits' 103A,103B second bending mode. In another embodiment, other frequencies/bending modes may be utilized.

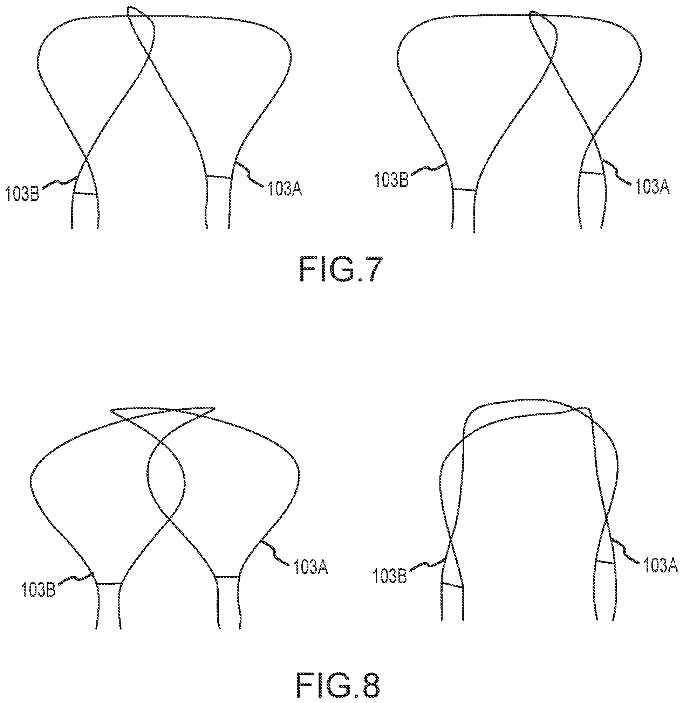

**FIG. 6** illustrates the first bending mode of a dual-U-tube Coriolis sensor, as an example. Flowing fluid causes a Coriolis force which excites the off-resonant response of the second bending mode at frequency shown in **FIG. 7. FIG. 8** illustrates the second bend mode of a dual-U-tube as a result of the same example fluid flow illustrated in FIG. 7.

By adding an additional drive signal, the sensor can excite both the 1st and 2nd bending modes. These excitation signals are $V_{LPO}$, which represents the LPO voltage at the first bend mode frequency, while $V_{LPO2}$ represents the LPO voltage at the second bend mode frequency, and so on.

In order for these two signals to be independent, in an embodiment the second signal $i_{drive2}$ is generated in an open loop fashion. It is not created by scaling and phase shifting $V_{LPO2}$ or $V_{RPO2}$, or else it will provide no more information than a regular driving sensor. In an embodiment, $i_{drive2}$ is generated with a scaling factor on the frequency and amplitude of $i_{drive}$ but at an arbitrary phase. This provides a signal that is not phase locked to $i_{drive}$. These signals may be generated by the alternate bending mode routine 211.

In an embodiment, $i_{drive2}$, $V_{LPO2}$, and $V_{RPO2}$ are independent of all other signals. Therefore, the phase differences between $i_{drive2}$, $V_{LPO2}$, and $V_{RPO2}$ are all measurable. Thus, it may be ascertained whether phase changes are symmetric (as expected with flow) or asymmetric (indicating an external magnet).

In an embodiment, the effects of external magnets are quantified and corrected. The mass flow may still be calculated using the 1st bend mode, while the 2nd bend mode can simply be used as a check for external magnets during normal operation.

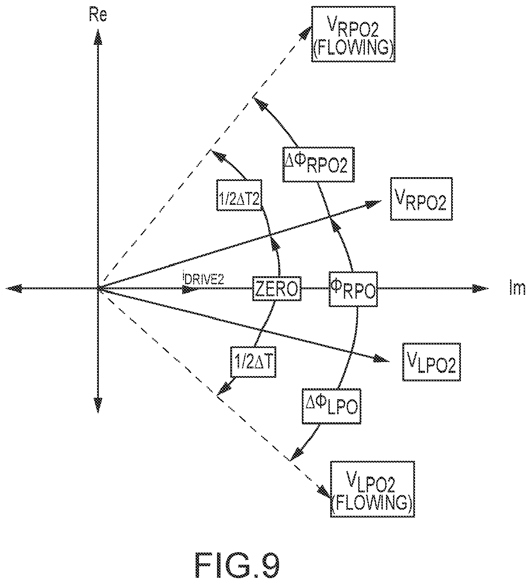

At zero flow, $i_{drive2}$ is ideally 90° out of phase with both $V_{LPO2}$ and $V_{RPO2}$. As flow increases, the phase of both $V_{LPO2}$ and $V_{RPO2}$ will shift symmetrically away from $i_{drive2}$, to $V_{LPO2(FLOWING)}$ and $V_{RPI2(FLOWING)}$ , respectively, as shown in **FIG. 9**.

Therefore, in an embodiment the asymmetry between pickoffs may be calculated. In an embodiment, the calculation employs the following equations:

$$\Phi_{L,i2} = phase\ between\ V_{LPO2}\ and\ i_{drive2} \qquad (1)$$

$$\Phi_{R,i2} = phase\ between\ V_{RPO2}\ and\ i_{drive2} \qquad (2)$$

$$a = asymmetry = \ 1 - \frac{(\Phi_{L,i2})}{(\Phi_{R,i2})} \qquad (3)$$

Based on this methodology, asymmetry should be zero for all flowing and non-flowing conditions. It will only change when one pickoff signal acts differently than the other pickoff signal. This indicates magnetic tampering. By comparing a zero flow rate with a measured asymmetry, a tamper correction factor may be calculated and applied to the measured flow rate that offsets the effects of magnetic tampering. If magnetic tampering is detected, in an embodiment, a flag is logged by meter electronics. In an embodiment, if magnetic tampering is detected an alarm is triggered. The alarm may be an audible and/or visible. In an embodiment, the alarm comprises a notification delivered to a remote device, such as a server, computer, phone, meter electronics, or other electronics device.

The detailed descriptions of the above embodiments are not exhaustive descriptions of all embodiments contemplated by the inventors to be within the scope of the present description. Indeed, persons skilled in the art will recognize that certain elements of the above-described embodiments may variously be combined or eliminated to create further embodiments, and such further embodiments fall within the scope and teachings of the present description. It will also be apparent to those of ordinary skill in the art that the above-described embodiments may be combined in whole or in part to create additional embodiments within the scope and teachings of the present description.

Thus, although specific embodiments are described herein for illustrative purposes, various equivalent modifications are possible within the scope of the present description, as those skilled in the relevant art will recognize. The teachings provided herein can be applied to other sensors, sensor brackets, and conduits and not just to the embodiments described above and shown in the accompanying figures. Accordingly, the scope of the embodiments described above should be determined from the following claims.

**Claims**

1. A Coriolis flowmeter (5), comprising:

    flow conduits (103A, 103B);
    a driver (104) and pick-off sensors (105, 105') connected to the flow conduits (103A and 103B);
    a meter electronics (20) configured to drive the driver (104) to oscillate the flow conduits (103A, 103B) in a first bending mode, and to receive signals from the pick-off sensors (105, 105');
    **characterized by**:

        wherein a phase of each pick-off sensor (105, 105') is measured relative to a third independent signal comprising a drive signal representing a drive mode other than the first bending mode; and
        wherein the meter electronics (20) is configured to indicate a presence of an external magnetic field if a magnetic field is detected.

2. The Coriolis flowmeter (5) of claim 1, wherein the presence of an external magnetic field is indicated when a zero-flow rate is compared to a measured asymmetry between an open loop driver signal $i_{drive2}$, and pickoff voltages $V_{LPO2}$, and $V_{RPO2}$, wherein $V_{LPO2}$, and $V_{RPO2}$ are pickoff voltages at a second bend mode frequency.

3. The Coriolis flowmeter (5) of claim 1, wherein a tamper correction factor is calculated and applied to the measured flowrate to offset the effect of an external magnetic field when the presence of an external magnetic field is detected.

4. The Coriolis flowmeter (5) of claim 1, wherein an alarm is triggered when the presence of an external magnetic field is detected.

5. A method for operating a Coriolis flowmeter comprising:

    flowing a flow material through flow conduits of the flowmeter;
    driving a driver connected to the flow conduits to oscillate the flow conduits in a first bending mode;
    receiving signals from pick-off sensors connected to the flow conduits;
    **characterized by**:

        wherein a phase of each pick-off sensor is measured relative to a third independent signal comprising a drive signal representing a drive mode other than the first bending mode; and
        indicating a presence of an external magnetic field if a magnetic field is detected.

6. The method for operating a Coriolis flowmeter of claim 5, wherein the presence of an external magnetic field is indicated when a zero-flow rate is compared to a measured asymmetry between an open loop driver signal $i_{drive2}$, and pickoff voltages $V_{LPO2}$, and $V_{RPO2}$, wherein $V_{LPO2}$, and $V_{RPO2}$ are pickoff voltages at a second bend mode frequency.

7. The method for operating a Coriolis flowmeter of claim 5, wherein a tamper correction factor is calculated and applied to the measured flowrate to offset the effect of an external magnetic field when the presence of an external magnetic field is detected.

8. The method for operating a Coriolis flowmeter of claim 5, wherein an alarm is triggered when the presence of an external magnetic field is detected.

FIG. 1

EP 4 488 634 A2

METER ELECTRONICS 20

PROCESSING SYSTEM 203

STORAGE SYSTEM 204

| FLOWMETER ROUTINE | 205 | DRIVE GAIN | 306 |
|---|---|---|---|
| MASS FLOW | 221 | TRANSDUCER VOLTAGE | 303 |
| DENSITY | 225 | | |
| VISCOSITY | 223 | | |
| TEMPERATURE | 224 | | |
| MAGNETIC FIELD DETECTION ROUTINE 209 | | | |
| ALTERNATE BENDING MODE ROUTINE 211 | | | |
| | | | |
| | | | |

INTERFACE 201

FIG.2

FIG.3

FIG.4

FIG.5

FIG.6

103B 103A

103B 103A

FIG.7

103B 103A

103B 103A

FIG.8

FIG.9

**REFERENCES CITED IN THE DESCRIPTION**

**Patent documents cited in the description**

- US 4109524 A
- US 4491025 A
- RE 31450